# EUROPEAN PATENT APPLICATION

(11) **EP 2 993 747 A1**
(43) Date of publication of application: **09.03.2016**
(21) Application number: 14183216.2
(22) Date of filing: 02.09.2014
(51) Int. Cl.: H02G 1/06, H02G 1/10, B63B 35/04, B65H 75/40

(54) **A cable storage assembly**

(71) Applicant: Siemens Aktiengesellschaft, 80333 München (DE)
(72) Inventor: Soerensen, Johnny, 6920 Videbæk (DK)

(57) **Abstract**

A cable storage assembly is provided comprising
- a standard size container frame (210), and
- roll-up means (220, 230, 240) suitable for
- coiling at least one cable (250) within the standard size container frame (210),
- uncoiling the at least one cable (250) at an installation site.

Further, a transport vehicle transporting several cable storage assemblies as described herein and a method for installing at least one cable are suggested.

## Description

The invention relates to a cable storage assembly, a transport vehicle transporting several cable storage assemblies and a method for installing at least one cable.

Sea cables, which are also referred to as submarine cables, are used for providing an electrical connection between offshore facilities like, e.g., an array of wind turbines in a wind farm or wind park.

A wind farm is a group of wind turbines in a same location used for production of electric power. A wind farm is preferably located offshore taking the advantage of strong winds blowing over the surface of an ocean or lake.

Energy or electricity produced by the offshore wind farms is, e.g., supplied by the sea cables to a transmission network and ultimately to the users. Thereby, individual wind turbines are interconnected with a medium voltage power collection system comprising, e.g., a grid of array cables interconnecting the wind turbines of the wind farms.

At a substation as an interface between the medium voltage power collection system and a high voltage transmission system, the adducted medium voltage is increased with a transformer. Thereby, the transformed voltage, i.e. energy, is transported via so called "export cables" to land.

According to an exemplary embodiment, these array cables are laid in the sea ground at a depth of at least 1.5 meters to protect the cables from damages. The laying is carried out with special ships or vessels using different technologies.

However, these array cables as well as the export cables (both being also referred to as "offshore cables") are often relatively thick and non-flexible and consequently sensitive to bending and damage from harsh environment. As a further consequence, additional time and economically effort is necessary installing such kind of offshore cables, in particular in offshore wind farms.

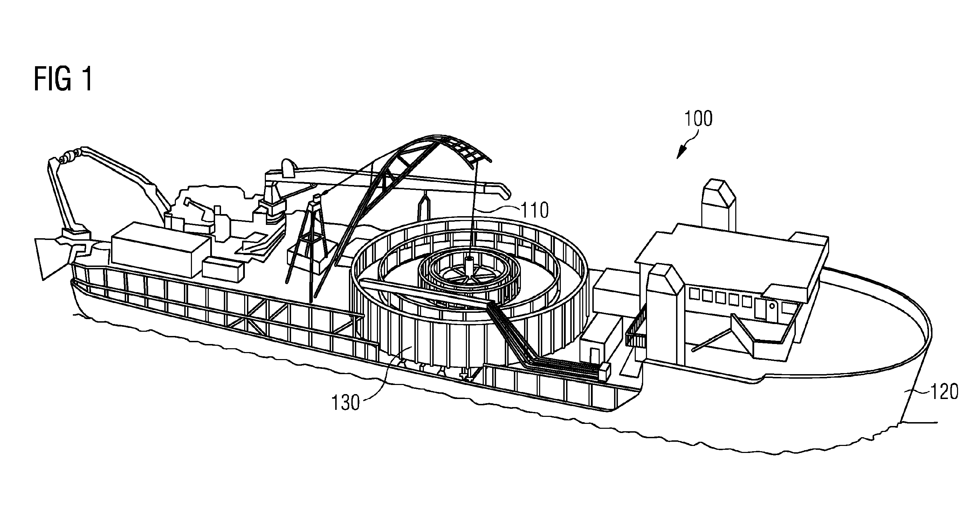

Fig.1 shows an exemplary known scenario 100 for installing an offshore cable 110. Thereby, the offshore cable 110 is laid-out by a cable-vessel 120 comprising a turn table 130 with the rolled up, i.e. coiled offshore cable 110. Alternatively, several individual offshore cables like, e.g., array cables with individual length may be coiled around the turn table 130, each of the array cables to be installed separately.

Before leaving a harbor, the offshore cable has to be coiled around the turn table at a cable factory. The loaded turn table has to be shipped to the harbor for relocation or transshipping to the cable-vessel specialized for cable transport and installation at site.

The aforementioned solution comprises some disadvantages:
- Cable-vessels designed for the transport of turn tables are large specialized vessels with high costs in operation due to the limited number of disposable cable-vessels,
- Cable-vessels need to travel to appropriate harbors suitable for transshipping or reloading the turn-table,
- A specialized transport is necessary between the cable factory and the harbor,
- Coiling the offshore cable around the turn-table is very time consuming.

The object is thus to overcome such disadvantages and in particular to provide an improved approach for an offshore cable installation.

This problem is solved according to the features of the independent claims. Further embodiments result from the depending claims.

In order to overcome this problem, a cable storage assembly is provided comprising
- a standard size container frame, and
- roll-up means suitable for
   - coiling at least one cable within the standard size container frame,
   - uncoiling the at least one cable at an installation site.

The proposed cable storage assembly is preferably based on the dimensions of an intermodal or standard container representing a standard container size for normal transport on road or sea. As an advantage, the handling of the cable storage assembly with a standard size container frame is cost beneficial compared to cable transport techniques according to known prior at.

As a further advantage, the same cable storage assembly comprising the standard size container frame may be used as a unique cable carrier from the cable factory to the installation site without any unnecessary re-rolling of the cable.

In an embodiment, the roll-up means is suitable for holding tension in the at least one cable during uncoiling of the cable.

By holding the tension by the roll-up means or by a roll-up device, the installation process of the cable will be simplified.

In another embodiment, the roll-up means comprises at least one hydraulic motor communicating with a cable drum located within the standard size container frame.

By implementing a motor within the cable storage assembly not external roll-up means or separate roll-up device is necessary. Thus, the coiling, i.e. roll-up of the cable around the cable drum within the cable storage assembly will be simplified and consequently more cost efficient.

In a further embodiment, the roll-up means comprises at least one gear communicating with the at least one hydraulic motor and the cable drum. Thus, the cable installation process will be more simplified and therefore more cost efficient.

In a next embodiment, the roll-up means comprises tension holding means, in particular at least one break.

By implementing at least one break within the cable storage assembly, the holding of the tension in the at least on the cable during layout of the cable will be improved, thereby simplifying the cable installation process.

It is also an embodiment that the cable storage assembly is based on a standard size ISO container designed for a transport on a standard transport vehicle.

ISO container can be moved from one mode of transport to another (e.g. from ship, to rail, to truck) without unloading and reloading the content of the container.

Pursuant to another embodiment, a length of the container is 20-feet or 40-feet.

According to an embodiment, the standard transport vehicle is
- a truck,
- a train, or
- a ship or vessel.

According to another embodiment, the at least one cable is designed for
- transporting electricity,
- transmitting telecommunication signals, or
- transmitting television signals.

The problem stated above is also solved by a transport vehicle transporting several cable storage assemblies as described herein, wherein the cable storage assemblies are arranged such on the transport vehicle that,
- at least one cable storage assembly may be uncoiled until the at least one cable storage assembly is empty,
- at least one cable may be uncoiled from one of the remaining storage assemblies, and
- during uncoiling from the one of the remaining storage assemblies the uncoiled cable may be guided through the at least one cable storage assembly being already empty.

In yet another embodiment,
- the cable storage assemblies are arranged in a sequence from a backside of the vehicle towards a front side of the vehicle,
- the cable storage assemblies are uncoiled sequentially starting from the cable storage assembly nearest to the backside of the vehicle along the sequence towards the front side of the vehicle.

According to a next embodiment, several sequences of cable storage assemblies are stacked on the vehicle.

Pursuant to yet an embodiment, the vehicle is a vessel suitable for installing an offshore cable at a wind park.

The problem mentioned supra is also solved by a method for installing at least one cable comprising the following steps,
- coiling the at least one cable within a cable storage assembly having a standard size container frame,
- securing the at least one cable storage assembly on a transport vehicle,
- transporting the at least one cable storage assembly to an installation site, and
- installing the at least one cable at the installation site by uncoiling the at least one cable from the at least one cable storage assembly.

According to a further embodiment, the method comprises the following steps:
- securing several cable storage assemblies on the transport vehicle,
- uncoiling at least one of the secured cable storage assemblies until the at least one secured cable storage assembly is empty,
- uncoiling one further of the secured cable storage assemblies with the uncoiled cable being guided through the at least one secured cable storage assembly being already empty.

Embodiments of the invention are shown and illustrated in the following figures:
- Fig.2: shows a perspective schematic view of an exemplary embodiment of a cable storage assembly according to the proposed solution;
- Fig.3: illustrates a section view of the suggested cable storage assembly along a section line II - II of Fig.2;
- Fig.4: shows a further section view of the suggested cable storage assembly along a section line III - III of Fig.2;
- Fig.5: shows an exemplary scenario using the suggested cable storage assembly for installing offshore cable at an offshore wind farm;
- Fig.6: shows the cable-vessel of Fig.5 after arrival at the installation site;
- Fig.7: shows an advanced state of a cable installation process as initially shown in Fig.6;
- Fig.8: shows the installation process in a more advanced state;
- Fig.9: shows a potential final state of the installation process.

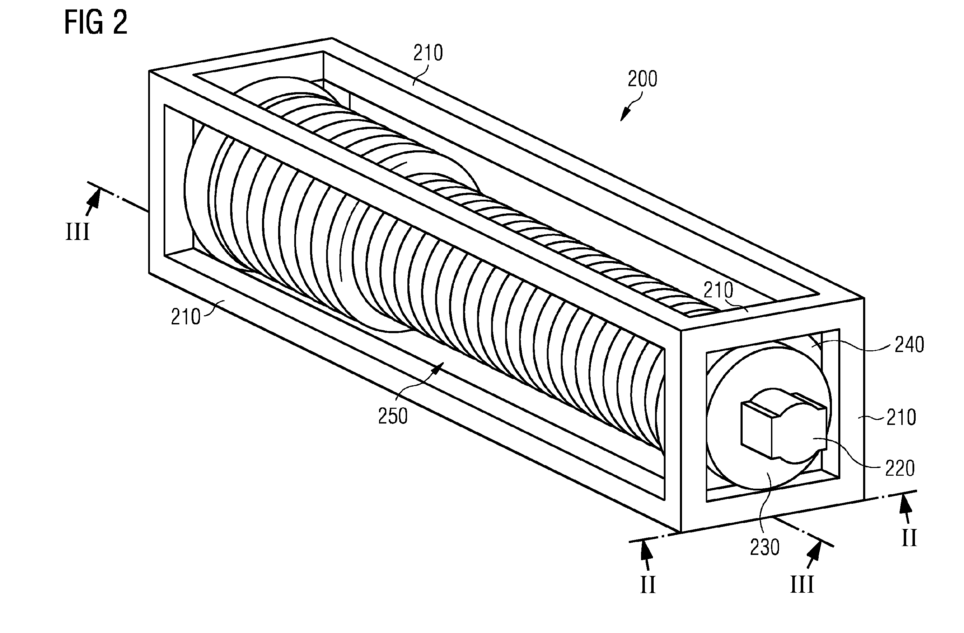

Fig.2 shows a perspective schematic view of an exemplary embodiment of a cable storage assembly 200 according to the proposed solution. Thereby, the cable storage assembly 200 comprises a container frame 210 based on a standard size ISO container which is also referred to as "intermodal container".

Intermodal or standard container are standardized reusable steel boxes suitable for storing and moving material and products efficiently and securely in a global containerized intermodal freight transport. "Intermodal" indicates that the container may be moved from one mode of transport to another (e.g. from ship, to rail, to truck) without unloading and reloading the content of the container.

Lengths of standard container may vary from 8 to 56 feet (2,4 to 17,0 meter).

Further, the proposed cable storage assembly 200 comprises roll-up means or a roll-up device 220, 230, 240 suitable for coiling at least one cable 250 around a cable drum 240 arranged within the container frame 210 and for uncoiling the cable 250 at a installation site like, e.g., an offshore wind farm.

The at least one cable 250 may be an offshore cable.

One exemplary embodiment of the roll-up means 220, 230, 240 comprise a hydraulic motor 220, wherein the roll-up means or the hydraulic motor may include further means for keeping or holding tension of the cable during, e.g., roll-out or layout of the at least one cable 250. One possible embodiment of such tension holding means is a brake suitable for dampening the roll-out of the cable 250, i.e. for dampening, i.e. controlling an actual speed during uncoiling, i.e. installation of the cable 250.

The roll-up means 220, 230, 240 further comprises a gear 230 attached between the hydraulic motor 220 and the cable drum 240 for coiling or uncoiling the cable 250 more effectively.

According to a further possible embodiment the suggested cable storage assembly 200 may comprise a container lock (not shown in Fig.2) for securing the cable storage assembly 200 during transport and stacking.

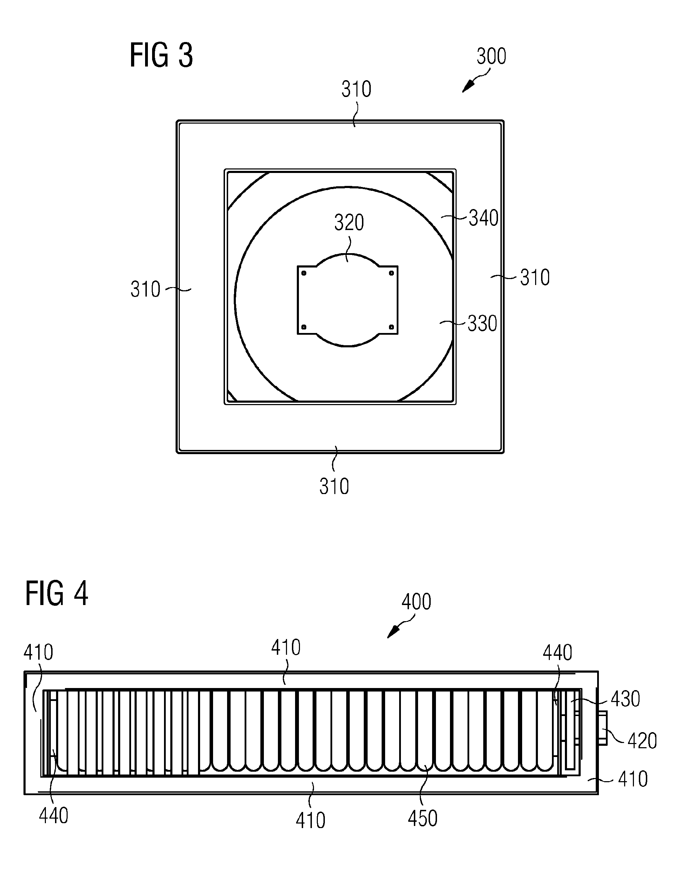

Fig.3 illustrates a section view of the suggested cable storage assembly 300 along a section line II - II of Fig.2 thereby showing a hydraulic motor 320 and a gear 330 located between the hydraulic motor 320 and a cable drum 340 arranged within a container frame 310.

Fig.4 shows a further section view of the suggested cable storage assembly 400 along a section line III - III of Fig.2, thereby illustrating a hydraulic motor 420 and a gear 430 located between the hydraulic motor 420 and a cable drum 440 arranged within a container frame 410. A cable 450 is coiled around the cable drum in a way being distributed equally on the cable drum 440.

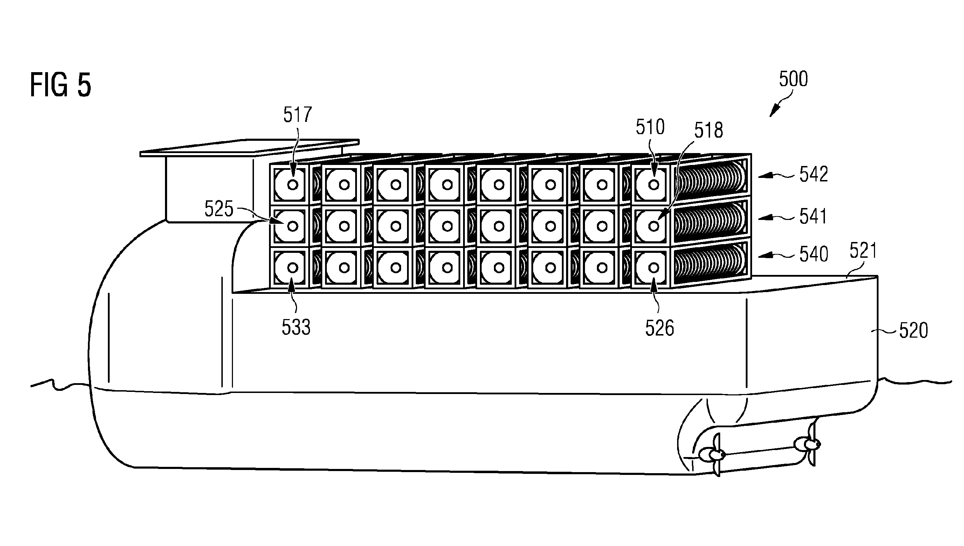

Fig.5 shows an exemplary scenario 500 using the suggested cable storage assembly for installing offshore cable at an offshore wind farm. Thereby, 24 cable storage assemblies 510,...,533 are stacked and secured on a cable-vessel 520 being on a way towards the offshore wind farm. Each of the cable storage assemblies 510,...,533 is designed according to the proposed solution as exemplarily shown in Fig.2.

According to Fig.5, the cable storage assemblies 510,...,533 are stacked on a transport platform 521 of the cable-vessel 520 in an arrangement of three sequences or rows 540,...,542, each of the rows 540,...,542 comprising eight cable storage assemblies 510,...,533. Thereby, a first row 540 comprises the cable storage assemblies 526,...,533 being directly arranged on the transport platform 521. A second row 541 comprises the cable storage assemblies 518,...,525 being stacked on the first row 540. A third row 542 comprises the cable storage assemblies 510,...,517 being stacked on the second row 541.

As shown in Fig.5, the cable storage assembly 526 being part of the first row 540, the cable storage assembly 518 of the second row 541 and the cable storage assembly 510 being part of the third row 542 are arranged nearest to a backside of the cable-vessel 520. Further, the cable storage assembly 533 of the first row 540, the cable storage assembly 525 being part of the second row 541 and the cable storage assembly 517 of the third row 542 are arranged nearest to a front side of the cable-vessel 520.

Each of the cable storage assemblies 510,...,533 includes one or several offshore cables which have been coiled or rolled around a cable drum at a cable factory before shipping (e.g. by a truck) the cable storage assemblies 510,...,533 to the harbor for transshipping or reloading to the cable-vessel 520.

According to the proposed solution, the uncoiling of the offshore cables will start with one of the cable storage assemblies located nearest to the back of the cable-vessel 520, i.e. with one of the cable storage assemblies 510, 518 or 526.

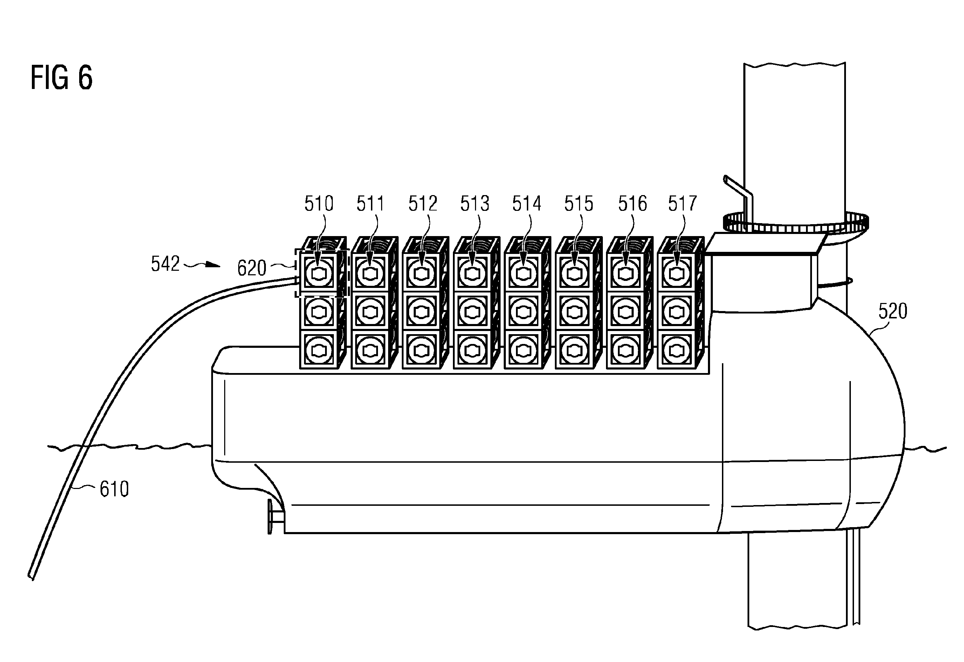

Fig.6 shows the cable-vessel of Fig.5 after arrival at the installation site and just staring an exemplary cable installation process. Thereby, according to an exemplary scenario, an offshore cable 610 is uncoiled from the cable storage assembly 510 located in the row 542 nearest to the backside of the cable-vessel 620. In the exemplary scenario as shown in Fig.6, the cable storage assembly 510 is the first one (highlighted with a dotted rectangular 620) out of 24 to be uncoiled.

According to the proposed solution, after uncoiling of the first cable storage assembly 510, a second cable storage assembly 511 following next in the row 542 towards the front side of the cable-vessel 520 will be uncoiled (this scenario is not shown in Fig.6). Thereby, according to the invention, during uncoiling the offshore cable 610 from the second cable storage assembly 511, the uncoiled offshore cable 610 will be guided through the first cable storage assembly 510 being already uncoiled, i.e. being empty. The uncoiled offshore cable 610 will be laid in the sea ground, e.g., as a part of a grid of array cables interconnecting wind turbines of the wind park.

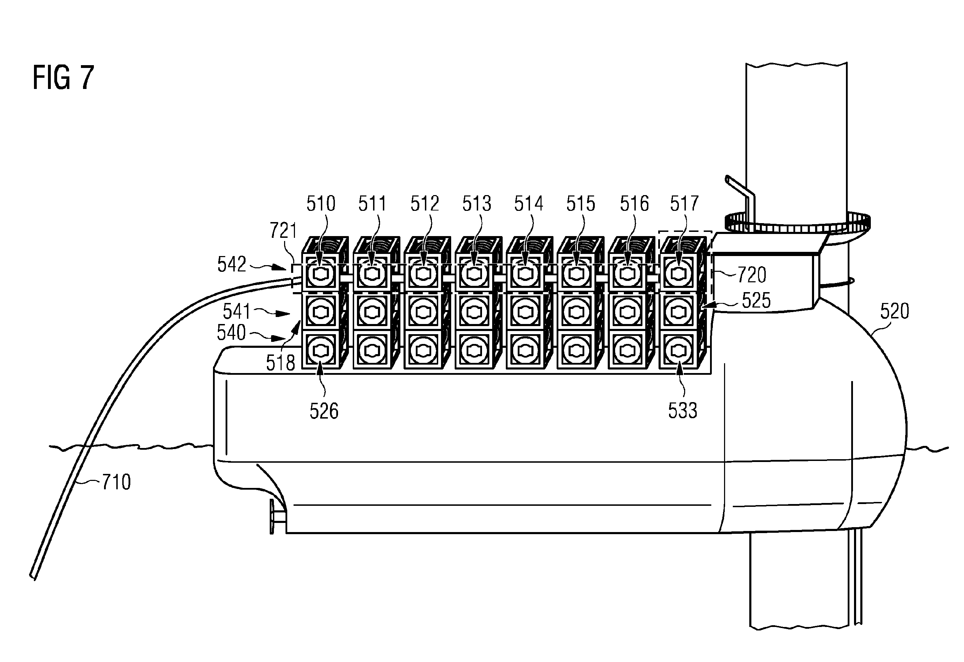

Fig.7 shows an advanced state of the cable installation process as initially shown in Fig.6. Thereby, the seven cable storage assemblies 510,...,516 being nearest to the backend of the cable-vessel 520 within the row 542 have been already uncoiled, i.e. are empty. As exemplary shown in Fig.7, the eighth cable storage assembly 517 of the row 542 located nearest to the front side of the cable-vessel 520 is uncoiled (indicated by a dotted rectangular 720). During uncoiling the eighth cable storage assembly 517 an uncoiled offshore cable 710 is guided through the remaining seven cable storage assemblies 510,...,516 of the row 542 being already uncoiled or empty (indicated by a dotted rectangular 721).

After uncoiling the cable storage assemblies 510,...,517 located within the row 542 the proposed installation process will be continued with the ninth cable storage assembly 518 located nearest to the backside of the cable-vessel 520 within the row 541.

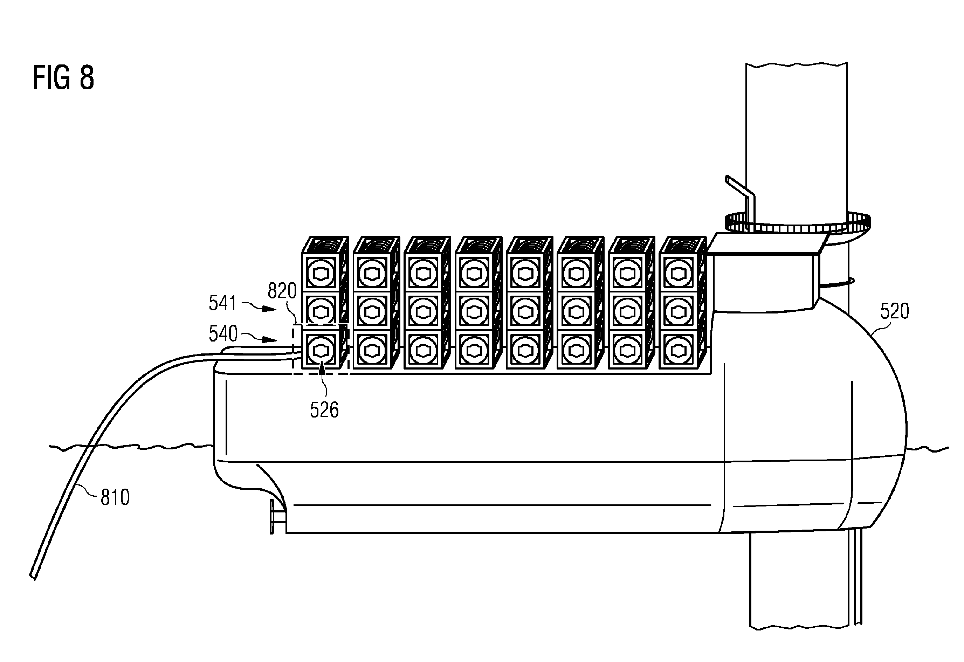

Accordingly, after uncoiling all the cable storage assemblies 518,...,525 of the row 541 the installation process will be continued with the 17th cable storage assembly 526 nearest to the backside of the cable-vessel 520 within the row 540. This is illustrated in Fig.8 showing the installation of an offshore cable 810 in a more advanced state. Thereby, the 17th cable storage assembly 526 nearest to the backside within the row 540 is uncoiled (indicated by a dotted rectangular 820).

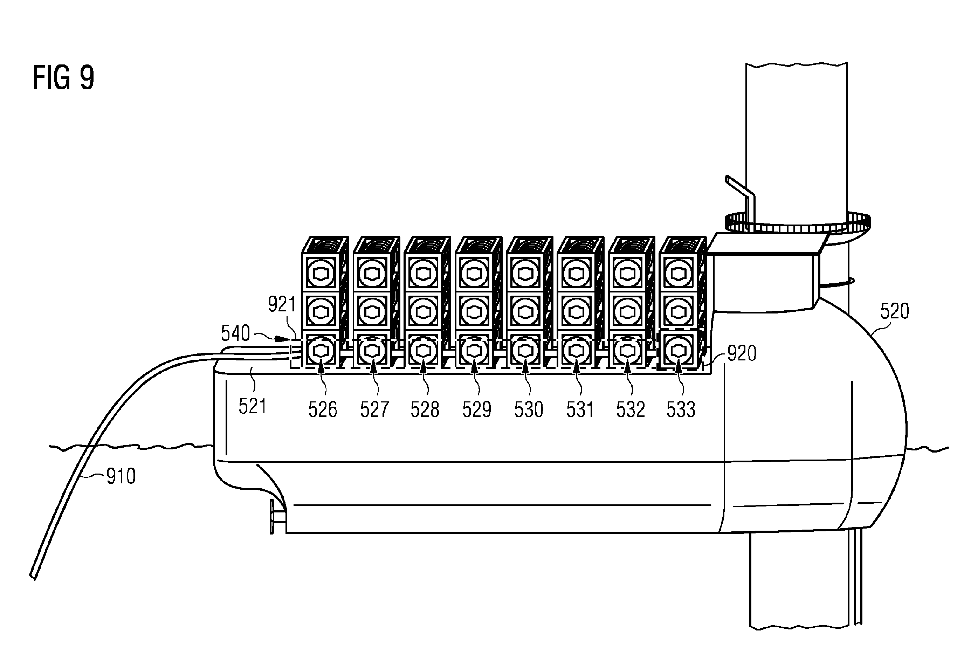

Fig.9 shows a potential final state of the aforementioned installation process. Thereby, the 24^{th}, i.e. the last cable storage assembly 533 nearest to the front side of the cable-vessel 520 within the row 540 is uncoiled (highlighted with a dotted rectangular 920). During uncoiling the 27th cable storage assembly 533 an uncoiled offshore cable 910 is guided through the remaining seven cable storage assemblies 526,...,532 of the row 540 being already uncoiled or empty (indicated by an dotted rectangular 921).

It should be noted that each of the offshore cables being coiled around a cable drum within the proposed cable storage assembly may be laid out in the sea ground separately, i.e. individually. Alternatively, several individual offshore cables from one or different cable drums may be combined or connected before being laid out as an extended offshore cable in the sea ground.

As already mentioned above, all the cable storage assemblies 510,...,533 stacked on the transport platform 521 of the cable-vessel 520 are based on the dimensions of an intermodal or standard container, preferably based on a 40-feet container which is a standard container size for normal transport on road or sea.

As an advantage, the handling of standard container is cost beneficial compared to the specialized handling of large size items like, e.g., the handling of turn tables loaded with one or several rolled up offshore cable.

As a further advantage, standard container, in particular 40-feet container may be handled in all mayor harbors whereas large size items like, e.g. turn tables, may be handled only in a few specialized harbors.

Beneficially, the loading or roll-up of the cables, i.e. the coiling of the cables within the standard container frame maybe done directly at the cable factory. Further, the transport of the loaded standard container maybe directly managed to an appropriate harbor, ready for transshipping the arriving container to a ship or vessel for further transport.

It should be noted, that the proposed solution is not limited to offshore cable. Although other kind of cable like, e.g., telecommunication cables (like fiber optic cables) or television cable may be handled according to the proposed solution.

In addition to the aforementioned advantages, the proposed solution does also have some further beneficial:
- the same cable storage assembly or container maybe used as a unique cable carrier from factory to installation site, i.e. no unnecessary re-rolling of the cable is necessary,
- a space saving concept maybe a used on a ship or vessel for the transport of the offshore cable, i.e. more length of a cable altogether may be transported (e.g. turn-tables) compared to known cable transport techniques,
- a huge number of existing transport vehicles like, e.g., ships or vessels maybe used applying the proposed solution, whereas only a limited number of transport vehicles is available using cable transport techniques according to known prior art.

Although the invention is described in detail by the embodiments above, it is noted that the invention is not at all limited to such embodiments. In particular, alternatives can be derived by a person skilled in the art from the exemplary embodiments and the illustrations without exceeding the scope of this invention.

## Claims

1. A cable storage assembly (200) comprising
- a standard size container frame (210), and
- roll-up means (220, 230, 240) suitable for
- coiling at least one cable (250) within the standard size container frame (210),
- uncoiling the at least one cable (250) at an installation site.

2. The cable storage assembly according to claim 1, wherein the roll-up means (220, 230, 240) is suitable for holding tension in the at least one cable during uncoiling of the cable.

3. The cable storage assembly according to claim 2, wherein the roll-up means (220, 230, 240) comprises at least one hydraulic motor (220) communicating with a cable drum (240) located within the standard size container frame (210).

4. The cable storage assembly according to claim 3, wherein the roll-up means (220, 230, 240) comprises at least one gear (230) communicating with the at least one hydraulic motor (220) and the cable drum (240).

5. The cable storage assembly according to any of the preceding claims 2 to 4,
wherein the roll-up means (220, 230, 240) comprises tension holding means, in particular at least one break.

6. The cable storage assembly according to any of the preceding claims, wherein the cable storage assembly is based on a standard size ISO container designed for a transport on a standard transport vehicle.

7. The cable storage assembly according to claim 6, wherein a length of the container is 20-feet or 40-feet.

8. The cable storage assembly according to claim 6 or 7,
wherein
the standard transport vehicle is
- a truck,
- a train, or
- a ship or vessel.

9. The cable storage assembly according to any of the preceding claims, wherein
the at least one cable (250) is designed for
- transporting electricity,
- transmitting telecommunication signals, or
- transmitting television signals.

10. A transport vehicle (520) transporting several cable storage assemblies (510,..., 533) according to any of the preceding claims, wherein the cable storage assemblies (510,...,533) are arranged such on the transport vehicle (520) that,
- at least one cable storage assembly (510,...,516) may be uncoiled until the at least one cable storage assembly (510,...,516) is empty,
- at least one cable (710) may be uncoiled from one of the remaining storage assemblies (517), and
- during uncoiling from the one of the remaining storage assemblies (517) the uncoiled cable (710) may be guided through the at least one cable storage assembly (510,...,516) being already empty.

11. The transport vehicle according to claim 10, wherein
- the cable storage assemblies (510,..., 533) are arranged in a sequence (540,...,542) from a backside of the vehicle (520) towards a front side of the vehicle (520),
- the cable storage assemblies (510,..., 533) are uncoiled sequentially starting from the cable storage assembly nearest to the backside of the vehicle (520) along the sequence (540,...,542) towards the front side of the vehicle (520).

12. The transport vehicle according to claim 11, wherein several sequences (540,...,542) of cable storage assemblies (510,...,533) are stacked on the vehicle.

13. The transport vehicle according to any of the preceding claims 10 to 12, wherein
the vehicle (520) is a vessel suitable for installing an offshore cable at a wind park.

14. A method for installing at least one cable comprising the following steps,
- coiling the at least one cable within a cable storage assembly (510,...,533) having a standard size container frame,
- securing the at least one cable storage assembly (510,...,533) on a transport vehicle (520),
- transporting the at least one cable storage assembly (510,...,533) to an installation site, and
- installing the at least one cable at the installation site by uncoiling the at least one cable (610, 710, 810, 910) from the at least one cable storage assembly (510,...,533).

15. The method according to claim 14, comprising the following steps
- securing several cable storage assemblies (510,...,533) on the transport vehicle (520),
- uncoiling at least one of the secured cable storage assemblies (510,...,533) until the at least one secured cable storage assembly (510,...,533) is empty,
- uncoiling one further of the secured cable storage assemblies (510,...,533) with the uncoiled cable (710, 910) being guided through the at least one secured cable storage assembly (510,...,533) being already empty.
